# EUROPEAN PATENT APPLICATION

(11) **EP 2 407 755 A1**
(43) Date of publication of application: **18.01.2012**
(21) Application number: 10007215.6
(22) Date of filing: 13.07.2010
(51) Int. Cl.: G01C 21/36, G06Q 10/00, G08G 1/0962

(54) **Method for notifying a user of an event with a navigation system**

(71) Applicant: Harman Becker Automotive Systems GmbH, 76307 Karlsbad (DE)
(72) Inventor: Redel, Sergey, 73240 Wendlingen (DE)
(74) Representative: Bertsch, Florian Oliver

(57) **Abstract**

A method for notifying a user of an event with a navigation system (100) is provided. According to the method the event for which the user is to be notified is defined and a user-defined message related to the event is recorded and stored (201, 202). The event comprises an arrival at a predetermined geographical position which is automatically determined by the navigation system (203). The navigation system (100) automatically monitors if the event (114, 117, 118) is occurring (204), and upon occurring of the event (114, 117, 118) the user-defined message assigned to the event is automatically output (205).

## Description

The present application relates to a method for notifying a user of an event with a navigation system and to a navigation system.

### Background of the invention

When a user wants to travel from a current position to a destination defined by the user, a navigation system is a helpful means to guide the user during the travel. When planning the travel, the user may plan to do certain things during the travel, for example the user wants to stop at a shopping mall, make a brake at a certain restaurant, or make a phone call some kilometres before arriving the destination to inform somebody that the user will reach the destination shortly. However, during travelling the user may be concentrated on the traffic and thus may forget these additional planned tasks.

Therefore, it is an object of the present invention to help the user with convenient and appropriate means to perform the planned tasks during traveling.

### Summary of the invention

According to the present invention this object is achieved by a method for notifying a user of an event with a navigation system as defined in claim 1 and a navigation system as defined in claim 7. The dependent claims define preferred and advantageous embodiments of the invention.

According to an aspect of the present invention, a method for notifying a user of an event is provided. The user is notified by a navigation system. According to the method, first, a user-defined event for which the user is to be notified is defined. The event comprises an arrival at a predetermined geographical position. The geographical position is automatically determined by the navigation system. Furthermore, a user-defined message which is related to the event is recorded and stored. The message is assigned to the event and it is automatically monitored if the event is occurring. When the event is occurring, the user-defined message which is assigned to the occurring event is automatically output.

According to the above-described method, the user of the navigation system may define one or more events of which the user wants to be notified during the travel. For example, the user may want to be notified of a restaurant or a shop at a certain geographical position. When planning the route or during the travel, the user may then record a user-defined message related to this event and assign this message to the event. Then the navigation system automatically monitors when the user is reaching this geographical position and outputs the user-defined message upon reaching the geographical position. The user-defined message may for example be audio data which is recorded and stored. As a reminder the user may record a message like "pizza store on the right" or "buy some food at the shopping mall" and may assign these messages to geographical positions along the route the user is travelling. As the navigation system is continuously keeping track of the geographical position, the user will be automatically reminded of the planned tasks during the travel with the self-defined messages. As an alternative, the messages may comprise written text which is entered by the user and output on a display of the navigation system. However, by reminding the user of the planned tasks automatically, the user will not forget the things the user planned to do during the travel.

According to an embodiment, the event comprises an arrival at a predetermined position of a route calculated by the navigation system. The predetermined position may comprise for example the destination of the route itself or a so-called point of interest (POI) at the route. As an example, the point of interest may be for example a beach and the related message may remind the user to check how high the waves in the see are and if surfing is possible. Furthermore, at the destination the user may be reminded by a previously recorded message to congratulate a person the user is going to meet at the destination.

According to another embodiment, the event comprises getting closer than a predetermined distance to a predetermined position. The predetermined position is a position of a route calculated by the navigation system. When the user is for example travelling to a foreign country where a vignette is required for passing through motorways and motor roads of the foreign country, for example Switzerland and Austria, the user may define a message like "do not forget to buy a vignette" and may define that this message is to be output when the user is getting closer than 20 kilometres to the frontier of the foreign country. Thus, the user will not forget to buy the vignette well in advance.

According to another embodiment, the navigation system is installed in a vehicle and adapted to retrieve a status information of the vehicle. The event comprises a state change of the status information of the vehicle. The status information may comprise for example a filling level of a fuel tank of the vehicle. As an example, the user may define a message like "just ten litres gas left" and this message will be output when the filling level of the fuel tank falls below 10 litres.

According to another aspect of the present invention a navigation system is provided. The navigation system comprises a user interface and a processing unit. The user interface is adapted to input and output information from and to a user of the navigation system. The user interface may comprise a graphical user interface comprising input means like a mouse, a joystick, a touchscreen and push buttons, and a display, for example a liquid crystal display. The user interface may furthermore comprises audio input and output means, for example a microphone and a loudspeaker. The user interface may be adapted to configure and operate the navigation system. The processing unit is coupled to the user interface and adapted to receive an input from the user defining an event for which the user wants to be notified. The event comprises an arrival at a predetermined geographical position automatically determined by the navigation system. The processing unit is furthermore adapted to receive and store a user-defined message related to the event, assign the message to the event, monitor if the event is occurring, and, upon occurring of the event, output the user-defined message assigned to the event. The navigation system is therefore adapted to perform the above-described method and comprises therefore the above-described advantages.

The navigation system may comprise a mobile personal navigation device (PND) or a navigation system of a vehicle.

Although specific features described in the above summary and the following detailed description are described in connection with specific embodiments, it is to be understood that the features of the embodiments can be combined with each other unless noted otherwise.

### Brief Description of the Drawings

The invention will now be described in more detail with reference to the accompanying drawings.
Fig. 1 shows schematically a navigation system according to an embodiment of the present invention.
Fig. 2 shows a flow chart of a method according to an embodiment of the present invention.

### Detailed Description of the Preferred Embodiments

In the following, exemplary embodiments of the present invention will be described in detail. It is to be understood that the following description is given only for the purpose of illustrating the principles of the invention and is not to be taken in a limiting sense. Rather, the scope of the invention is defined only by the appended claims and not intended to be limited by the exemplary embodiments hereinafter.

It is to be understood that the features of various exemplary embodiments described herein may be combined with each other unless specifically noted otherwise.

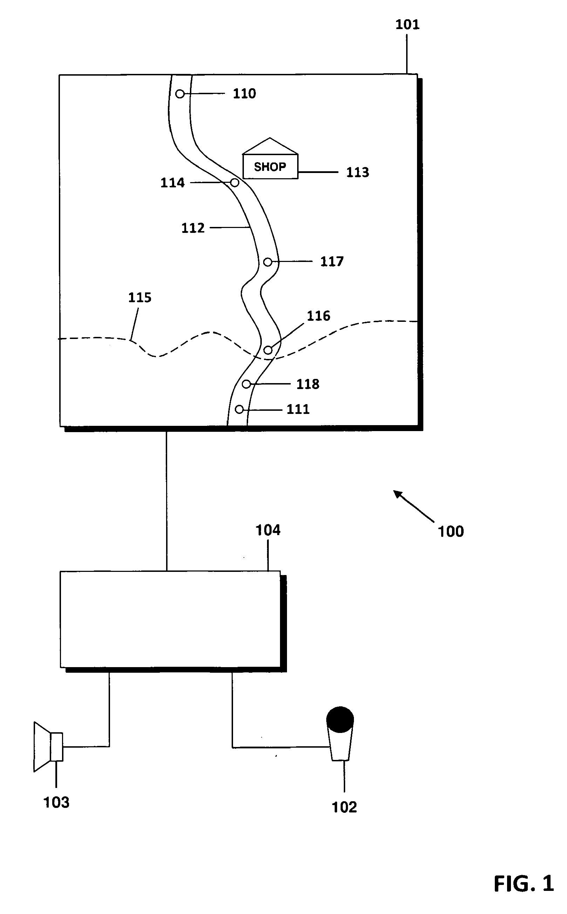

Fig. 1 shows schematically a navigation system 100. The navigation system comprises a user interface comprising a display 101, a microphone 102 and a loudspeaker 103. The navigation system 100 furthermore comprises a processing unit 104 which is coupled to the components 101-103 of the user interface. The display 101 may comprise a touch-sensitive surface composing in combination with the display a so-called touchscreen for displaying and entering information to and from a user. The navigation system 100 may comprise additional components which are not shown in Fig. 1 to simplify matters, for example a receiver for receiving a positioning information from a satellite-based global positioning system (GPS) and control buttons or other input and output means for communicating with the user.

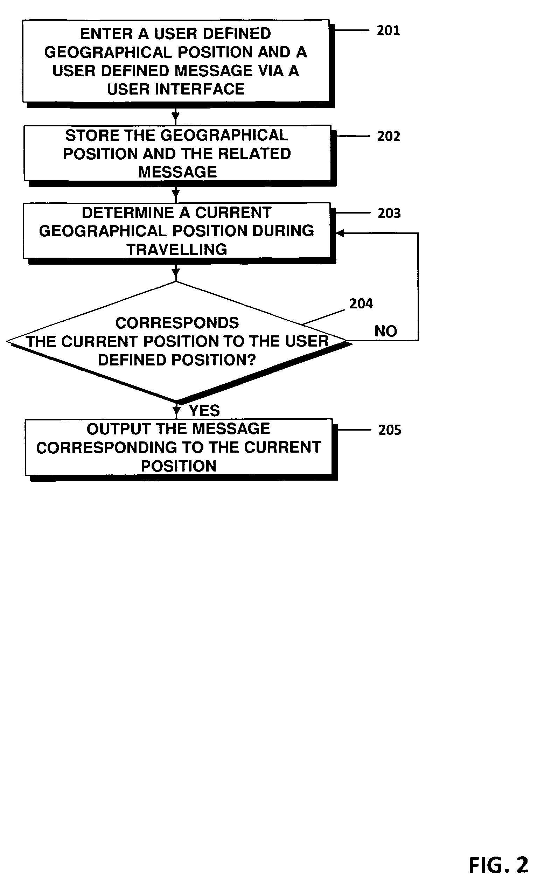

Operation of the navigation system 100 will now be described in more detail in connection with Figs. 1 and 2. In Fig. 1 a road map is displayed on display 101. Assuming a user of the navigation system 100 wants to travel from a current geographical position 110 to a destination 111, the user may enter the destination address as it is known in the art and the processing unit 104 may calculate a route from the current position 110 to the destination 111. The route calculated by the processing unit 104 may be displayed on the display 101 as indicated by reference sign 112 in Fig. 1.

Before starting travelling or during travelling it may come to the user's mind that the user needs to buy some food. Therefore, the user takes a look at the route 112 displayed on the display 101 and activates so-called points of interest (POI) which are then displayed on the display 101. One kind of these points of interest may comprise shops and shopping malls. Thus, a shop 113 is displayed on the display 101. Therefore, the user selects a point 114 nearby the shop 113 on the route 112 and activates a reminder function of the navigation system for defining that a message at this point 114 should be output by the navigation system 100 when the point 114 is reached. In response to this the navigation system 100 requests the user to input the message to be output at point 114 via the microphone 102. The user inputs a corresponding reminder message, for example "stop for buying some food" (step 201 in Fig. 2) and the processing unit 104 stores the geographical position of point 114 and the related message input via the microphone 102 (step 202 in Fig. 2).

When looking at the map displayed on the display 101, the user may recognize that on the way to the destination 111 a frontier 115 is crossed. The user may know that a vignette is required for travelling on motorways in the country behind frontier 115, and therefore the user selects point 116 near the crossing of the route 112 and the frontier 115 and activates again the reminder function of the navigation system 100. As the user does not exactly know where it will be possible to buy the vignette, at the frontier or some kilometres in advance, the user configures the reminder function such that the reminder will be output 20 kilometres before reaching point 116 with the message "look for buying a vignette". Finally, the user selects the reminder function of the navigation system 100 a third time with the geographical position of the destination 111 and defines that the message "call meeting partner" shall be output 10 kilometres before reaching the destination 111.

During the travel the navigation system 100 continuously determines the current geographical position where the user is travelling (step 203 in Fig. 2). Furthermore, the processing unit 104 continuously compares the determined current geographical position with the user-defined positions or with positions which are at a distance away from the user-defined positions as required by the user (step 204 in Fig. 2). Therefore, upon reaching position 114 the processing unit 104 outputs the first message "stop for buying some food" via loudspeaker 103. Then, as the user wants to be reminded 20 kilometres ahead of the frontier 115, the processing unit 104 checks if geographical position 117 is reached. Geographical position 117 is at a distance of 20 kilometres in front of point 116. Therefore, when reaching geographical position 117, the message "look for buying a vignette" is automatically output by the processing unit 104. Finally, the processing unit 104 checks if the current position corresponds to geographical position 118, which corresponds to a position at a distance of 10 kilometres to the destination 111. As long as position 118 is not reached, the current geographical position is continuously determined (case "no" of test 204 in Fig. 2; continue with step 203). When the current position corresponds to geographical position 118, the message which was stored for this geographical position is output (case "yes" of test 204 in Fig. 2; continue with step 205).

While exemplary embodiments have been described above, various modifications may be implemented in other embodiments. For example, the geographical position where the user-defined message is output may also be calculated by the processing unit 104 as a position that will be reached at a point of time being a predetermined amount of time before reaching the user-defined geographical position. The predetermined amount of time may be configurable by the user.

Finally, it is to be understood that all the embodiments described above are considered to be comprised by the present invention as it is defined by the appended claims.

## Claims

1. A method for notifying a user of an event with a navigation system, the method comprising the steps of:
- defining the event (114, 117, 118) for which the user is to be notified, the event (114, 117, 118) comprising an arrival at a predetermined geographical position automatically determined by the navigation system (100),
- recording and storing a user defined message related to the event (114, 117, 118),
- assigning the message to the event (114, 117, 118),
- monitoring automatically if the event (114, 117, 118) is occurring, and
- upon occurring of the event (114, 117, 118), outputting automatically the user defined message assigned to the event (114, 117, 118).

2. The method according to claim 1, wherein the event comprises an arrival at a predetermined position (114) of a route (112) calculated by the navigation system (100).

3. The method according to claim 1 or 2, wherein the event (117, 118) comprises approaching a predetermined position (116, 111) closer than a predetermined distance, the predetermined position (116, 111) being a position of a route (112) calculated by the navigation system (100).

4. The method according to any of the preceding claims, wherein the navigation system (100) is comprised by a vehicle, wherein the event comprises a state change of a of a status information of the vehicle.

5. The method according to claim 4, wherein the status information of the vehicle comprises a filling level of a fuel tank of the vehicle.

6. The method according to any of the preceding claims, wherein the message comprises audio data.

7. A navigation system comprising:
a user interface (101-103) adapted to input and output information from and to a user of the navigation system (100), and
a processing unit (104) coupled to the user interface (101-103), the processing unit (104) being adapted to:
- receive an input from the user defining an event (114, 117, 118) for which the user is to be notified, the event (114, 117, 118) comprising an arrival at a predetermined geographical position automatically determined by the navigation system (100),
- receive and store a user defined message related to the event (114, 117, 118),
- assign the message to the event (114, 117, 118),
- monitor if the event (114, 117, 118) is occurring, and
- upon occurring of the event (114, 117, 118) output the user defined message assigned to the event (114, 117, 118).

8. The navigation system according to claim 7, wherein the event comprises an arrival at a predetermined position (114) of a route (112) calculated by the navigation system (100).

9. The navigation system according to claim 7 or 8, wherein the event (117, 118) comprises approaching a predetermined position (116, 111) closer than a predetermined distance, the predetermined position (116, 111) being a position of a route (112) calculated by the navigation system (100).

10. The navigation system according to any one of claims 7-9, wherein the navigation system (100) is coupled to a vehicle and adapted to retrieve a status information of the vehicle, wherein the event comprises a state change of the status information.

11. The navigation system according to claim 10, wherein the status information of the vehicle comprises a filling level of a fuel tank of the vehicle.

12. The navigation system according to any one of claims 7-11, wherein the message comprises audio data.

13. The navigation system according to any one of claims 7-12, wherein the navigation system (100) comprises a mobile personal navigation device or a navigation system of a vehicle.
